Europäisches Patentamt

European Patent Office

Office européen des brevets

(11) Veröffentlichungsnummer: **0 230 554 B1**

## EUROPÄISCHE PATENTSCHRIFT

(45) Veröffentlichungstag der Patentschrift: **06.03.91**

(51) Int. Cl.⁵: **C23C 4/10**

(21) Anmeldenummer: **86116376.4**

(22) Anmeldetag: **25.11.86**

(54) Hochtemperatur-Schutzschicht und Verfahren zu ihrer Herstellung.

(30) Priorität: **12.12.85 DE 3543802**

(43) Veröffentlichungstag der Anmeldung:
**05.08.87 Patentblatt 87/32**

(45) Bekanntmachung des Hinweises auf die
Patenterteilung:
**06.03.91 Patentblatt 91/10**

(84) Benannte Vertragsstaaten:
**CH DE GB LI NL**

(56) Entgegenhaltungen:
EP-A- 0 086 330    EP-A- 0 187 919
FR-A- 1 169 865    FR-A- 1 488 835
FR-A- 2 101 653    GB-A- 2 041 246
GB-A- 2 073 169    GB-A- 2 080 147
GB-A- 2 121 780    US-A- 3 190 769
US-A- 3 989 872    US-A- 4 447 501
US-A- 4 532 184

(73) Patentinhaber: **Asea Brown Boveri Aktiengesellschaft
Kallstadter Strasse 1
W-6800 Mannheim 31(DE)**

(72) Erfinder: **Rohr, Franz Josef, Dr.
Forstweg 2
W-6941 Abtsteinach(DE)**
Erfinder: **Chu, Wing Fong, Dr. Dipl.-Chem.
Geheimrat-Schott-Strasse 32
W-6906 Leimen(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

EP 0 230 554 B1

## Beschreibung

Die Erfindung bezieht sich auf eine Hochtemperatur-Schutzschicht aus einem keramischen Material gemäß dem Oberbegriff des Patentanspruches 1, sowie auf ein Verfahren zur Herstellung derselben.

Aus der Informationsschrift "Metall 36 (1982), Teil I, Seite 882 ff. sowie Teil II, Seite 1882 ff. sind oxidationsbeständige Bauelemente für Heißgasturbinen und Strahltriebwerke bekannt, die eine keramische Schutzschicht aufweisen, welche mittels Flamm- oder Plasmaspritzen auf die metallischen Bauelemente aufgetragen sind. Durch das Aufbringen dieser Schutzschichten werden die metallischen Bauelemente gegen korrodierende Einflüsse bei hohen Temperaturen geschützt. Der Schutz besteht in der Herabsetzung von unerwünschten chemischen Angriffen auf das Bauelement und/oder in der Absenkung der Temperatur im Oberflächenbereich des Bauelementes gegenüber der Temperatur an der Oberfläche der Schutzschicht.

Bei diesem Flamm- oder Plasmaspritzen werden teilgeschmolzene bzw. weitgehend verflüssigte Keramikpartikel auf die Oberfläche des zu schützenden Bauelementes aufgespritzt. Versuche solche Hochtemperatur-Schutzschichten aus Zirkoniumoxid herzustellen, scheiterten bisher an der Tatsache, daß dieses Keramikmaterial stabilisiert werden muß. Hierfür wird Yttriumoxid oder Magnesiumoxid verwendet. Diese Materialien haben jedoch die Eigenschaft, daß sie mit Vanadiumpentoxid reagieren, das in heißen Gasen enthalten ist, mit denen Gasturbinen beaufschlagt werden. Hierdurch kommt es zu einer Entstabilisierung der kubischen Phase des Zirkoniumoxids. Dabei wird das mittels Plasmaspritzen aufgetragene keramische Material, insbesondere die so gebildete Schutzschicht von den Bauteil abgelöst, und dieses der direkten Korrossonseinwirkung der heißen Gase ausgesetzt.

Aus der GB-A-212178 ist ein keramisches Pulver bekannt, das aus 10 bis 50% Aluminiumoxid besteht, wobei der restliche Anteil des Pulvers durch stabilisiertes Zirkoniumdioxid gebildet wird.

In der US-A-3989872 ist ein mit Yttriumoxid stabilisiertes Zirkoniumoxidpulver beschrieben, das von einer Kalkschicht umgeben ist.

In der EP-A-187919 ist ein Pulver beschrieben, das aus Zirkoniumdioxid, Magnesiumoxid, Hafniumoxid, Ceroxid, Yttriumoxid oder Kombinationen hieraus hergestellt werden kann. Auf diese Pulverteilchen ist ein Bindemittel aufgetragen, das Aluminium oder Siliziumdioxidteilchen enthält.

Aus der GB-A-2080147 ist ein Verfahren zur korrosionsbeständigen Beschichtung von Gasturbinenbauteilen bekannt. Die eigentliche Schutzschicht, bestehend aus Ceroxid oder Zirkoniumoxid bzw. aus beiden Oxiden, wird unter Zwischenfügung einer Schicht aus Nickelchrom, Nickelaluminium oder CoCrAlY auf die Bauteile aufgetragen.

Der Erfindung liegt die Aufgabe zugrunde, eine Hochtemperatur-Schutzschicht aus keramischem Material aufzuzeigen, die besonders widerstandsfähig gegenüber korrosiven Bestandteilen von heißen Gasen ist, und die zudem auf der Oberfläche von metallischen Bauelementen besonders gut und beständig haftet, sowie die Verwendung dieser Schicht anzugeben.

Diese Aufgabe wird erfindungsgemäß durch die Merkmale der Patentansprüche 1 bis 7 gelöst.

Die erfindungsgemäße Hochtemperatur-Schutzschicht weist die geforderte mechanische Stabilität auf. Sie besitzt auch die notwendige Thermoschockfestigkeit sowie die erforderliche Korrosionsbeständigkeit. Die Stabilisierung des Zirkoniumoxids erfolgt durch ein Metalloxid, insbesondere durch Yttriumoxid oder Magnesiumoxid. Durch die Zugabe eines keramischen Materials in Form von Siliziumoxid, Aluminiumoxid, eines Aluminiumsilikats, eines Zirkoniumsilikats oder eines Aluminiumtitanats bzw. eines Gemisches hiervon wird um das mit Yttriumoxid bzw. Magnesiumoxid stabilisierte Zirkoniumoxid eine dauerhafte Schutzschicht gebildet, die nicht durch die korrosiven Einwirkungen, insbesondere durch chemische Reaktionen mit Bestandteilen der heißen Gase abgetragen werden kann.

Für die Herstellung der Hochtemperatur-Schutzschicht wird Zirkoniumoxid mit einem stabilisierenden keramischen Material in Form eines Metalloxids, vorzugsweise Yttriumoxid oder Magnesiumoxid sowie einem zweiten, eine Schutzschicht bildenden keramischen Material gemischt, gemahlen und anschließend bei einer Temperatur von 1500°C gesintert. Die hierbei gebildeten Teilchen eines Pulvers enthalten in ihrem Kern eine Zirkoniumoxid-Yttriumoxid-Verbindung bzw. eine Zirkoniumoxid-Magnesiumoxid-Verbindung, die mindestens bereichsweise von einer schützenden Hülle aus einem Aluminiumoxid, einem Zirkoniumsilikat oder einem Aluminiumtitanat umgeben sind. Das so gebildete Pulver wird mittels Plasmaspritzen oder Flammspritzen auf die Grundkörper metallischer Bauelemente aufgetragen. Vorzugsweise wird auf den Grundkörper dieser Bauelemente zuerst eine Haftzwischenschicht bestehend aus $M_1CrAlM_2$ aufgetragen. Dabei steht $M_1$ stellvertretend für Nickel, Kobalt, Nickel/Kobalt und $M_2$ für Yttrium, Yttrium/Silizium oder ein Material mit ähnlichen Eigenschaften.

Weitere erfindungswesentliche Merkmale sind in den Unteransprüchen gekennzeichnet.

Die Erfindung wird nachfolgend anhand von Zeichnungen näher erläutert.

Es zeigen:

Figur 1:    Ein Teilchen des nach dem erfindungsgemäßen Verfahren hergestellten die Hochtemperatur-Schutzschicht bildenden Pulvers,

Figur 2:    das Bauelement einer Gasturbine.

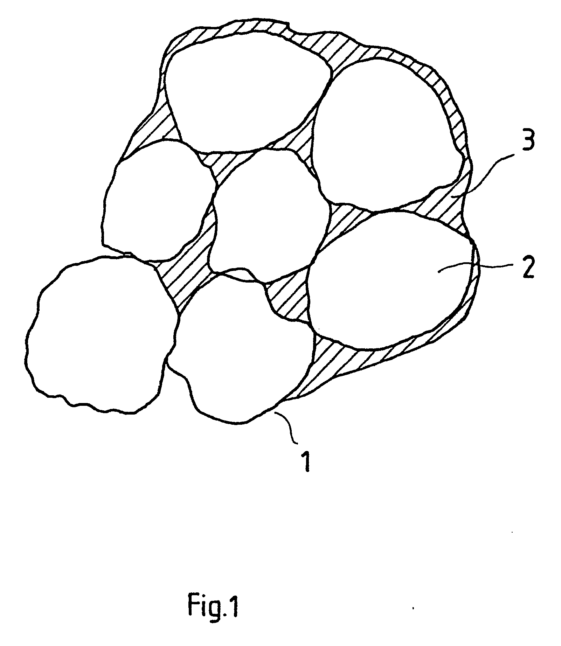

Figur 1 zeigt ein Teilchen des Pulvers, das für die Herstellung der Hochtemperatur-Schutzschicht verwendet wird. Zur Ausbildung solcher Teilchen wird insbesondere Zirkoniumoxid mit einem stabilisierenden keramischen Material und einem korrosionsbeständigen keramischen Material gemischt. Als stabilisierendes keramisches Ma terial kommen die Oxide der seltenen Erdmetalle in Frage. Vorzugsweise sind hierfür Yttriumoxid, Dysprosiumoxid sowie Gadoliniumoxid geeignet. Die Oxide der Erdalkalimetalle sind ebenfalls als stabilisierende keramische Materialien verwendbar. Vorzugsweise wird bei Verwendung eines Erdalkalimetalloxids Magnesiumoxid verwendet. Bei dem hier dargestellten Ausführungsbeispiel bestehen die den Kern des Teilchens 1 bildenden Partikel 2 aus Zirkoniumoxid, das mit Yttriumoxid stabilisiert ist. Diese Partikel 2 werden von einer Korrosionsschutzschicht 3 umgeben, welche durch Abscheiden von Zirkoniumsilikat, Aluminiumoxid, Aluminiumsilikat, einem Aluminiumtitanat oder einem Gemisch aus diesen Verbindungen gebildet wird. Zur Herstellung der das Pulver der Hochtemperatur-Schutzschicht bildenden Teilchen 1 wird Zirkoniumoxid mit dem oben beschriebenen stabilisierenden Metalloxid mit keramischen Eigenschaften und dem oben ebenfalls erläuterten korrosionsbeständigen Werkstoff gemischt, gemahlen und bei einer Temperatur von etwa 1500°C gesintert. Das dabei gebildete pulverförmige Material weist Teilchen auf, welche die in Figur 1 dargestellte Struktur besitzen. Mit welchen Mol-%en das Zirkoniumoxid mit dem stabilisierenden Material und dem korrosionsbeständigen keramischen Material zu mischen ist, kann nachfolgender Tabelle entnommen werden. In der Tabelle steht A stellvertretend für die seltenen Erdmetalle, insbesondere für Yttrium, Dysprosium und Gadolinium. B steht stellvertretend für die Erdalkalimetalle, insbesondere Magnesium.

| Grundmaterial Mol-% | | Stabilisatoroxid Mol-% | | Korrosionsschutz-Zusatz Mol-% | |
|---|---|---|---|---|---|
| 93-42 | $ZrO_2$ | 2-8 | $A_2O_3$ | 5-50 | $ZrSiO_4$ |
| 92-40 | $ZrO_2$ | 3-10 | $BO$ | 5-50 | $ZrSiO_4$ |
| 97-82 | $ZrO_2$ | 2-8 | $A_2O_3$ | 1-10 | $Al_2O_3$ |
| 96-75 | $ZrO_2$ | 3-15 | $BO$ | 1-10 | $Al_2O_3$ |
| 93-62 | $ZrO_2$ | 2-8 | $A_2O_3$ | 3/2-18/12 | $Al_2O_3/TiO_2$ |

Während des Sinterprozesses werden durch Festkörperreaktionen stabilisiertes $ZrO_2$ ($Y_2O_3$) bzw. $ZrO_2$ ($MgO$) und unstabilisiertes monoklines oder tetragonales Zirkoniumoxid sowie Zirkoniumsilikat aus Zirkoniumoxid und Siliziumoxid oder Quarz, und/oder Alphaaluminiumoxid und/oder Aluminiumsilikat aus Siliziumoxid und Aluminiumoxid, gebildet. Die sich bildenden Reaktionsprodukte Zirkoniumsilikat, Siliziumoxid, Alphaaluminiumoxid und Aluminiumsilikat reagieren nur wenig oder überhaupt nicht mit dem durch Yttriumoxid oder Magnesiumoxid stabilisierten bzw. dem unstabilisierten Zirkoniumoxid. Sie werden vielmehr in einer selbständigen Phase bevorzugt an den Korngrenzen der stabilisierten Zirkoniumoxidkristalle, insbesondere den Kristallen der Zirkoniumoxid-Yttriumoxid-Verbindungen, abgeschieden. Durch ein geeignetes Sinterverfahren kann, wie in Figur 1 dargestellt, eine weitgehende Umhüllung der stabilisierten Zirkoniumoxidkristalle durch diese Reaktionsprodukte erreicht werden. Die umhüllenden Reaktionsstoffe sind gegenüber Heißgaskorrosionen, wie sie durch Vanadiumpentoxid und Alkalisulfat hervorgerufen werden, beständig. Durch die umhüllenden Reaktionsprodukte wird das nicht korrosionsbeständige stabilisierte Zirkoniumoxid vor dem Angriff durch Vanadiumpentoxid und Alkalisulfat geschützt und damit die Langzeitbeständigkeit dieser keramischen Hochtemperatur-Schutzschicht, insbesondere in korrosiven heißen Gasen verbessert. Bei der Verwendung von Dysprosium oder Gadoliniumoxid als stabilisierendes keramisches Material besteht zwar die Gefahr, daß diese Materialien mit Vanadiumpentoxid und Alkalisulfat reagieren. Sie sind jedoch im Vergleich zu Yttriumoxid und Magnesiumoxid thermodynamisch stabiler, so daß zusammen mit einer oben beschriebenen Umhüllung um die stabilisierten Zirkoniumoxidkristalle eine weitere Verbesserung der Korrosionsfestigkeit der Hochtemperatur-Schutzschicht erreicht werden kann.

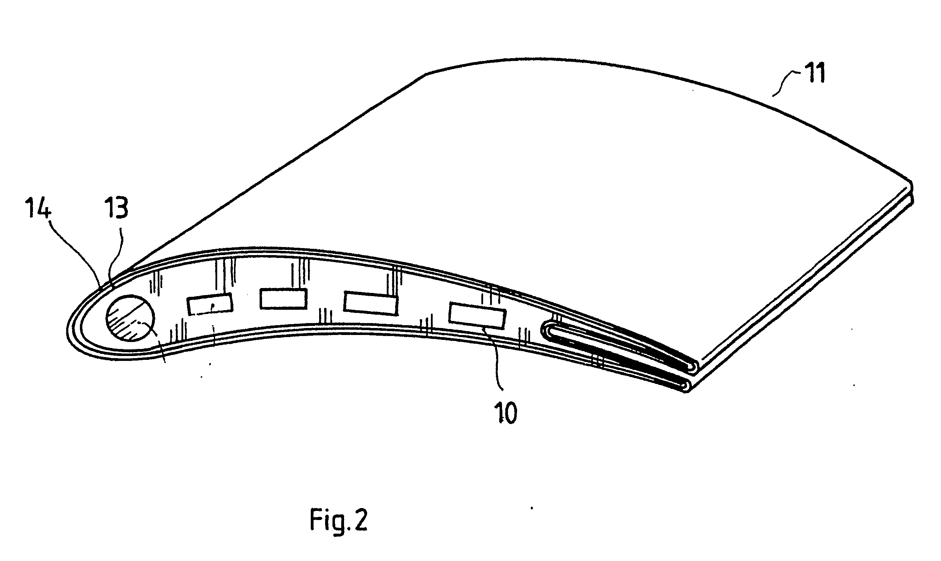

Figur 2 zeigt das Bauteil 11 einer Gasturbine. Dieses Bauteil 11 wird kontinuierlich von heißen Gasen beaufschlagt, die u.a. Vanadiumpentoxid und Alkalisulfat enthalten. Zum Schutz gegen korrosive Einwirkungen ist das Bauteil 11 mit der erfindungsgemäßen Hochtemperatur-Schutzschicht 14 überzogen. Der Grundkörper 10 des Bau elementes 11 besteht aus einem austenitischen Werkstoff. Auf die gereinigte Oberfläche des Grundkörpers 10 wird zunächst eine Haftzwischenschicht 13 aus einer Legierung mit der Zusammensetzung $M_1CrAlM_2$ aufgetragen. $M_1$ steht stellvertretend für Nickel, Kobalt oder eine Nickel-Kobalt-Verbindung, während $M_2$ für Yttrium oder eine Yttrium-Silizium-Verbindung steht. Diese Legierung wird mittels Plasmaspritzen auf den Grundkörper 10 aufgetragen. Im Anschluß daran wird das pulverförmige keramische Material, welches die Hochtemperatur-Schutzschicht bildet, ebenfalls mit Hilfe eines Plasmaspritzverfahrens auf den Grundkörper 10 des Bauelementes 11 aufgebracht. Das verwendete Pulver weist einen Korndurchmesser von etwa 25 bis 63 μm auf. Vorzugsweise weist die plasmagespritze keramische Hochtemperaturschutzschicht 14 eine Dicke von 100 bis 400 μm auf.

## Ansprüche

1. Hochtemperaturschutzschicht aus einem stabilisierten keramischen Material, insbesondere für Bauteile aus Superlegierungen, das aus 97 bis 82 Mol% Zirkoniumdioxid und 2 bis 8 Mol% eines stabilisierenden Werkstoffs Yttriumoxid mit einem Zusatz an 1 bis 10 Mol% eines korrosionsbeständigen Werkstoffes in Form von Aluminiumoxid gemischt, gemahlen und bei einer Temperatur von 1450° C bis 1500° C zur Bildung von stabilisierten Kristallen der Zirkoniumoxid-Yttriumoxid -Verbindungen gesintert und von einer korrosionsbeständigen Umhüllung aus dem korrosionsbeständigen Material umgeben ist.

2. Hochtemperaturschutzschicht aus einem stabilisierten keramischen Werkstoff, insbesondere für Bauteile aus einer Superlegierung, er aus 96 bis 75 - Mol% Zirkoniumdioxid und 3 bis 15 Mol% eines stabilisierenden Werkstoffes in Form von Magnesiumoxid mit einem Zusatz an 1 bis 10 Mol% eines korrosionsbeständigen Materials in Form von Aluminiumoxid gemischt, gemahlen und bei einer Temperatur von 1450° C bis 1500° C zur Bildung von stabilisierten Kristallen der Zirkoniumdioxid-Magnesiumoxid-Verbindungen gesintert und von einer korrosionsbeständigen Umhüllung aus dem korrosionsbeständigen Material umgeben ist.

3. Hochtemperaturschutzschicht aus einem stabilisierten keramischem Werkstoff, insbesondere für Bauteile aus einer Superlegierung, er aus 93 bis 42 -Mol% Zirkoniumdioxid mit 2 bis 8 Mol% eines stabilisierenden Werkstoffes in Form von Yttriumoxid mit einem Zusatz von 5 bis 50 Mol% eines korrosionsbeständigen Materials in Form von Zirkoniumsilikat gemischt, gemahlen und bei einer Temperatur von 1450° C bis 1500° C zur Bildung von stabilisierten Kristallen der Zirkoniumdioxid-Yttriumoxid-Verbindungen gesintert und von einer korrosionsbeständigen Umhüllung aus dem korrosionsbeständigen Material umgeben ist.

4. Hochtemperaturschutzschicht aus einem stabilisierten keramischen Werkstoff, insbesondere für Bauteile aus einer Superlegierung, er aus 92 bis 40 - Mol% Zirkoniumdioxid und 3 bis 10 Mol% eines stabilisierenden Materials in Form von Magnesiumoxid mit einem Zusatz von 5 bis 50 Mol% eines korrosionsbeständigen Materials in Form von Zirkoniumsilikat gemischt, gemahlen und bei einer Temperatur von 1450° C bis 1500° C zur Bildung von stabilisierten Kristallen der Zirkoniumdioxid-Magnesiumoxid-Verbindungen gesintert und von einer korrosionsbeständigen Umhüllung aus dem korrosionsbeständigen Material umgeben ist.

5. Hochtemperaturschutzschicht aus einem stabilisierten keramischen Werkstoff, insbesondere für Bauteile aus einer Superlegierung, er aus 93 bis 62 - Mol% Zirkoniumdioxid und 2 bis 8 Mol% eines stabilisierenden Werkstoffes in Form von Yttriumoxid mit einem Zusatz an von 5 Mol% bis 30 Mol% eines korrosionsbeständigen Materials in Form von Alumniumtitanat gemischt, gemahlen und bei einer Temperatur zwischen 1450° C und 1500° C zur Bildung von stabilisierten Kristallen der Zirkoniumdioxid-Yttriumoxidverbindungen gesintert und von einer korrosionsbeständigen Umhüllung aus dem korrosionsbeständigen Material umgeben ist.

6. Hochtemperaturschutzschicht aus einem stabilisierten keramischen Werkstoff, insbesondere für Bauteile aus einer Superlegierung, er aus 92 bis 55 - Mol% Zirkoniumdioxid und 3 bis 15 Mol% eines stabilisierenden Werkstoffes in Form von Magnesiumoxid mit einem Zusatz von 5 Mol% bis 30 Mol% eines korrosionsbeständigen Materials in Form von Aluminiumtitanat gemischt, gemahlen und bei einer Temperatur von 1450° C bis 1500° C zur Bidung von stabilisierten Kristallen der Zirkoniumdioxid-Magnesiumoxidverbindungen gesintert und von einer korrosionsbeständigen Umhüllung aus dem korrosionsbeständigen Material umgeben ist.

7. Verwendung der Hochtemperatur-Schutzschicht nach einem der Ansprüche 1 bis 6 auf Bauelementen (11) aus einer Superlegierung, auf deren Grundkörper (10) vor dem Auftragen der Hochtemperatur-Schutzschicht (14) eine Haftzwischenschicht (13) aus $M_1 CrAlM_2$ aufgetragen wird, und daß $M_1$ stellvertretend für Nickel, Kobalt oder eine Nickel-Kobalt-Verbindung und $M_2$ für Yttrium oder eine Yttrium-Silizium-Verbindung steht.

## Claims

1. High-temperature protective layer of a stabilized ceramic material, in particular for components made of superalloys, which has been mixed from 97 to 82 mol % of zirconium dioxide and 2 to 8 mol % of a stabilizing material in the form of yttrium oxide with the addition of 1 to 10 mol % of a corrosion-resistant material in the form of alumina, ground and sintered at a temperature of $1450°C$ to $1500°C$ to form stabilized crystals of the zirconium oxide/yttrium oxide compounds and is surrounded by a corrosion-resistant coating of the corrosion-resistant material.

2. High-temperature protective layer of a stabilized ceramic material of construction, in particular for components made of a superalloy, which has been mixed from 96 to 75 mol % of zirconium dioxide and 3 to 15 mol % of a stabilizing material in the form of magnesium oxide with an addition of 1 to 10 mol % of a corrosion-resistant material in the form of alumina, ground and sintered at a temperature of $1450°C$ to $1500°C$ to form stabilized crystals of the zirconium dioxide/magnesium oxide compounds and is surrounded by a corrosion-resistant coating of the corrosion-resistant material.

3. High-temperature protective layer of a stabilized ceramic material of construction, in particular for components made of a superalloy, which has been mixed from 93 to 42 mol % of zirconium dioxide with 2 to 8 mol % of a stabilizing material in the form of yttrium oxide with an addition of 5 to 50 mol % of a corrosion-resistant material in the form of zirconium silicate, ground and sintered at a temperature of $1450°C$ to $1500°C$ to form stabilized crystals of the zirconium dioxide/ yttrium compounds and is surrounded by a corrosion-resistant coating of the corrosion-resistant material.

4. High-temperature protective layer of a stabilized ceramic material of construction, in particular for components made of a superalloy, which has been mixed from 92 to 40 mol % of zirconium dioxide and 3 to 10 mol % of a stabilizing material in the form of magnesium oxide with an addition of 5 to 50 mol % of a corrosion-resistant material in the form of zirconium silicate, ground and sintered at a temperature of $1450°C$ to $1500°C$ to form stabilized crystals of the zirconium dioxide/magnesium oxide compounds and is surrounded by a corrosion-resistant coating of a corrosion-resistant material.

5. High-temperature protective layer of a stabilized ceramic material of construction, in particular for components made of a superalloy, which has been mixed from 93 to 62 mol % of zirconium dioxide and 2 to 8 mol % of a stabilizing material in the form of yttrium oxide with an addition of 5 mol % to 30 mol % of a corrosion-resistant material in the form of aluminium titanate, ground and sintered at a temperature between $1450°C$ and $1500°C$ to form stabilized crystals of the zirconium dioxide/yttrium oxide compounds and is surrounded by a corrosion-resistant coating of the corrosion-resistant material.

6. High-temperature protective layer of a stabilized ceramic material of construction, in particular for components made of a superalloy, which has been mixed from 92 to 55 mol % of zirconium dioxide and 3 to 15 mol % of a stabilizing material in the form of magnesium oxide with an addition of 5 mol % to 30 mol % of a corrosion-resistant material in the form of aluminium titanate, ground and sintered at a temperature of $1450°C$ to $1500°C$ to form stabilized crystals of the zirconium dioxide/magnesium oxide compounds and is surrounded by a corrosion-resistant coating of a corrosion-resistant material.

7. Use of the high-temperature protective layer according to one of Claims 1 to 6 on components (11) made of a superalloy, to whose base body (10) an adhesive interlayer (13) of $M_1 CrAlM_2$, where $M_1$ represents nickel, cobalt or a nickel/cobalt compound and $M_2$ represents yttrium or an yttrium/silicon compound, is applied before the application of the high-temperature protective layer (14).

**Revendications**

1. Couche protectrice pour hautes températures, constituée d'un matériau céramique stabilisé, en particulier pour pièces de construction en superalliages, qui est mélangé à partir de 97 à 82 % en moles de bioxyde de zirconium et de 2 à 8 % en moles d'un matériau stabilisant, sous forme d'oxyde d'yttrium, avec une addition de 1 à 10 % en moles d'un matériau résistant à la corrosion, sous forme d'oxyde d'aluminium, et broyé puis fritté à une température de 1 450 à 1 500° C, pour la formation de cristaux stabilisés des composés oxyde de zirconium-oxyde d'yttrium, et entouré d'un enrobage résistant à la corrosion, constitué du matériau résistant à la corrosion.

2. Couche protectrice pour hautes températures, constituée d'un matériau céramique stabilisé, en particulier pour pièces de construction en un superalliage, qui est mélangé à partir de 96 à 75 % en moles de bioxyde de zirconium et de 3 à 15 % en moles d'un matériau stabilisant, sous forme d'oxyde de magnésium, avec une addition de 1 à 10 % en moles d'un matériau résistant à la corrosion, sous forme d'oxyde d'aluminium, et broyé puis fritté à une température de 1 450 à 1 500° C, pour la formation de cristaux stabilisés des composés bioxyde de zirconium-oxyde de magnésium, et entouré d'un enrobage résistant a la corrosion, constitué du matériau résistant à la corrosion.

3. Couche protectrice pour hautes températures, constituée d'un matériau céramique stabilisé, en particulier pour pièces de construction en un superalliage, qui est mélangé à partir de 93 à 42 % en moles de bioxyde de zirconium avec 2 à 8 % en moles d'un matériau stabilisant, sous forme d'oxyde d'yttrium, avec une addition de 5 à 50 % en moles d'un matériau résistant à la corrosion, sous forme de silicate de zirconium, et broyé puis fritté à une température de 1 450 à 1 500° C, pour la formation de cristaux stabilisés des composés bioxyde de zirconium-oxyde d'yttrium, et entouré d'un enrobage résistant à la corrosion, constitué du matériau résistant à la corrosion.

4. Couche protectrice pour hautes températures, constituée d'un matériau céramique stabilisé, en particulier pour pièces de construction en un superalliage, qui est mélangé à partir de 92 à 40 % en moles de bioxyde de zirconium et de 3 à 10 % en moles d'un matériau stabilisant, sous forme d'oxyde de magnésium, avec une addition de 5 à 50 % en moles d'un matériau résistant à la corrosion, sous forme de silicate de zirconium, et broyé puis fritté à une température de 1 450 à 1 500° C, pour la formation de cristaux stabilisés des composés bioxyde de zirconium-oxyde de magnésium, et entouré d'un enrobage résistant à la corrosion, constitué du matériau résistant à la corrosion.

5. Couche protectrice pour hautes températures, constituée d'un matériau céramique stabilisé, en particulier pour pièces de construction en un superalliage, qui est mélangé à partir de 93 à 62 % en moles de bioxyde de zirconium et de 2 à 8 % en moles d'un matériau stabilisant, sous forme d'oxyde d'yttrium, avec une addition de 5 % en moles à 30 % en moles d'un matériau résistant à la corrosion, sous forme de titanate d'aluminium, et broyé puis fritté à une température comprise entre 1 450 et 1 500° C, pour la formation de cristaux stabilisés des composés bioxyde de zirconium-oxyde d'yttrium, et entouré d'un enrobage résistant à la corrosion, constitué du matériau résistant à la corrosion.

6. Couche protectrice pour hautes températures, constituée d'un matériau céramique stabilisé, en particulier pour pièces de construction en un superalliage, qui est mélangé à partir de 92 à 55 % en moles de bioxyde de zirconium et de 3 à 15 % en moles d'un matériau stabilisant, sous forme d'oxyde de magnésium, avec une addition de 5 % en moles à 30 % en moles d'un matériau résistant à la corrosion, sous forme de titanate d'aluminium, et broyé puis fritté à une température de 1 450 à 1 500° C, pour la formation de cristaux stabilisés des composés bioxyde de zirconium-oxyde de magnésium, et entouré d'un enrobage résistant à la corrosion, constitué du matériau résistant à la corrosion.

7. Utilisation de la couche protectrice pour hautes températures, selon l'une des revendications 1 à 6, sur des éléments de construction (11) à base d'un superalliage, sur les corps de base (10) desquels est appliquée, avant l'application de la couche protectrice (14) pour hautes températures, une couche intermédiaire d'adhérence (13) à base de $M_1CrAlM_2$, $M_1$ représentant le nickel, le cobalt ou un composé de nickel et de cobalt, et $M_2$ représentant l'yttrium ou un composé d'yttrium et de silicium.

Fig.1

Fig.2

EP 0 230 554 B1